Europäisches Patentamt

**European Patent Office**

**Office européen des brevets**

(11) Veröffentlichungsnummer: **0 014 468**
**B1**

(12) **EUROPÄISCHE PATENTSCHRIFT**

(45) Veröffentlichungstag der Patentschrift:
31.03.82

(51) Int. Cl.³: **B 60 T 15/04**

(21) Anmeldenummer: 80100608.1

(22) Anmeldetag: 06.02.80

(54) Mit einer Druckbegrenzungseinrichtung versehenes Bremsventil für Druckluftbremsanlagen von Kraftfahrzeugen.

(30) Priorität: 07.02.79 DE 2904545

(43) Veröffentlichungstag der Anmeldung:
20.08.80 Patentblatt 80/17

(45) Bekanntmachung des Hinweises auf die Patenterteilung:
31.03.82 Patentblatt 82/13

(84) Benannte Vertragsstaaten:
FR GB IT

(56) Entgegenhaltungen:
**DE-A-2 261 101**
**DE-A-2 446 140**
**DE-A-2 459 824**
**DE-A-2 624 650**
**DE-A-2 645 506**
**DE-A-2 723 787**
**Druckschrift der Fa. Westinghouse**
**»Luftgesteuertes Anhänger-Bremsventil«,**
**Nr. 471 200 vom Oktober 1964**

(73) Patentinhaber: **Graubremse GmbH, Eppelheimer Strasse 76, D-6900 Heidelberg (DE)**

(72) Erfinder: **Müller, Wolfgang, Dipl.-Ing., Eisenacher Weg 57, D-6800 Mannheim 31 (DE)**

(74) Vertreter: **Bibrach, Rudolf, Dipl.-Ing. et al, Patentanwälte Dipl.-Ing. R. Bibrach Dipl.-Ing. E. Rehberg Postfach 7 38, D-3400 Göttingen (DE)**

## Mit einer Druckbegrenzungseinrichtung versehenes Bremsventil für Druckluftbremsanlagen von Kraftfahrzeugen

Die Erfindung bezieht sich auf ein mit einer Druckbegrenzungseinrichtung versehenes Bremsventil für Druckluftbremsanlagen von Kraftfahrzeugen, mit einem vom ausgesteuerten Druck beaufschlagten Wiegekolben und einer Stufungsfeder im mechanischen Betätigungsteil, sowie mit einem Einlaßsitz, an dem Vorrats-Druckluft ansteht, einem Auslaßsitz zum Entlüften der Bremskammer und einem dem Einlaßventil und dem Auslaßventil zugeordneten Doppelventilkörper.

Ein mit einer Druckbegrenzungseinrichtung versehenes Bremsventil der eingangs beschriebenen Art ist aus der DE-A-2 261 101 bekannt. Dabei wird jedoch die Druckbegrenzung durch eine Wegbegrenzung des Hubes im mechanischen Betätigungsteil erreicht. Es finden hutartig ausgebildete Federteller Verwendung, die mit am Gehäuse vorgesehenen, verstellbaren Anschlägen zur Begrenzung des Betätigungsweges jeder Ventileinheit, die jedem Kreis zugeordnet ist, zusammenarbeiten. Fertigungstoleranzen an den Ventileinheiten bzw. deren Einzelteilen können durch die verstellbaren Anschläge ausgeglichen und die Höhe der Druckbegrenzung entsprechend eingestellt werden.

Aus der DE-A-2 459 824 ist ebenfalls ein Bremsventil der eingangs beschriebenen Art bekannt, bei dem wiederum die Druckbegrenzung durch eine Wegbegrenzung des Hubes im mechanischen Betätigungsteil erreicht wird. Dabei finden gegenüber dem Gehäuse verstellbar angeordnete Anschläge Verwendung, die in den Betätigungsweg des Wiegebalkens des zweikreisig ausgebildeten Bremsventiles eingreifen. Darüber hinaus ist die Ventileinheit des einen Kreises mit einer Rückhalteeinrichtung versehen, so daß der andere Kreis Voreilung bekommt. Diese Rückhalteeinrichtung wird dadurch gebildet, daß der Wiegekolben der betreffenden Ventileinheit nicht nur über eine im Wiegeraum angeordnete Feder gehäuseseitig abgestützt ist, sondern zusätzlich noch durch eine weitere zweite Wiegefeder, die mit der ersten parallel arbeitet, abgestützt wird. Diese zweite Wiegefeder ist jedoch nicht im Wiegeraum, sondern unterhalb der Ventileinheit gelagert, wodurch es erforderlich wird, einen gesonderten Stößel und ein Druckstück vorzusehen, die der Kraftübertragung dienen, und den Doppelventilkörper des Einlaßventiles und des Auslaßventiles durchbrochen auszubilden. Die Rückhalteeinrichtung hat jedoch mit der Druckbegrenzung nichts zu tun.

Die DE-A-2 645 506 zeigt ebenfalls ein zweikreisiges Bremsventil, jedoch ohne eine Einrichtung zur Begrenzung des maximalen Ausgangsdruckes. Die Kraftübertragung im oberen Teil des Ventiles wird auf hydraulischem Wege herbeigeführt und aufgeteilt, wobei eine mechanische Aufteilung mit Wiegebalken zur Sicherheit zusätzlich vorgesehen sein kann. Es handelt sich jedoch um ein weggesteuertes Bremsventil. Es wird ein Betätigungsweg vorgegeben, zu dem ein einziger Wiegekolben mit Wiegefeder einen proportionalen Bremsdruck aussteuert. Lediglich zur Trennung des hydraulischen Teiles von den pneumatischen Teilen sind kolbenartig ausgebildete Stößel vorgesehen, deren freie Enden die Doppelventilkörper der Aus- und Einlaßventile betätigen. Diese Bauart weicht von den bisher beschriebenen Bauarten auch insofern ab, als keine Stufungsfeder im mechanischen oder hydraulischen Betätigungsteil vorgesehen ist. Der einzige Wiegekolben ist im unteren Teil der Ventileinheit gelagert und über eine starke Feder, deren Kraft einstellbar ist, gehäuseseitig aufgelagert. Der Wiegekolben selbst trägt den Einlaßsitz und ist gegenüber der Vorratsdruckluft entlastet ausgebildet. Auf der dem ausgesteuerten Druck abgekehrten Seite besitzt er eine vom Atmosphärendruck beaufschlagte Wirkfläche, auf die zusätzlich die erste und einzige Wiegefeder einwirkt. Zwischen dem Wiegekolben und dem kolbenartigen Stößel ist eine Feder zum Öffnen des Auslaßventiles und zur Rückführung der Kolbenteile im hydraulischen Betätigungsteil vorgesehen. Der kolbenartige Stößel und der Wiegekolben sind in einem einzigen durchgehenden Zylinder gelagert. Der Hub des kolbenartigen Stößels ist um den Öffnungsweg des Auslaßventiles größer als der Hub des Wiegekolbens. Der Wiegekolben weist zwei Dichtungen gleichen Durchmessers auf, wobei zwischen diesen Dichtungen die Vorratsdruckluft herangeführt ist. Bremskammer und Wiegekammer sind hier ein gemeinsamer Raum.

Die DE-A-2 723 787 zeigt ein zweikreisig ausgebildetes Tandembremsventil, bei dem der den Einlaßsitz tragende Kolben mit zwei Dichtungen ausgestattet und mittig an Druckluft-Vorratsluft angeschlossen ist. Der Kolben ist geringfügig beweglich gelagert und auf einer Feder gehäuseseitig abgestützt. Es ist ein Anschlag für die Begrenzung der Beweglichkeit des Kolbens vorgesehen, so daß auf diese Weise — solange ein hoher Druck vorherrscht — das Auslaßventil des zweiten Kreises einen vergleichsweise vergrößerten Auslaßquerschnitt freigibt bzw. besitzt. Eine Druckbegrenzung ist damit jedoch nicht erreichbar, weil durch den Anschlag Abschlußstellungen nicht eintreten können.

Aus der Druckschrift 471 200, Ausgabe Oktober 1964, der Firma Wabco Westinghouse ist ein luftgesteuertes Anhänger-Steuerventil mit Druckbegrenzung bekannt, welches für eine Einleitungsbremse bestimmt ist. Das Anhängersteuerventil funktioniert bekanntlich so, daß eine Drucklufteinsteuerung eine Entlüftung der Anhängerbremse auslöst. Zusätzlich ist an dem Anhängersteuerventil eine nicht-stufbare Handbremse angeschlossen, die in gleichem Sinne wirkt. Die Druckbegrenzung in der Steuerleitung der Einleitungsbremse wird durch die Anordnung eines zweifach abgedichteten, den beweglichen Einlaßsitz tragenden Kolbens mit mittigem Vorrats-Druckluftanschluß und Abstützung des Kolbens auf einer einstellbaren Feder erreicht. Dieses Anhänger-Steuerventil besitzt jedoch keine Stufungsfeder, wie sie bei Bremsventilen unumgänglich notwendig ist.

Der Erfindung liegt die Aufgabe zugrunde, ein mit einer Druckbegrenzungseinrichtung versehenes Bremsventil der eingangs beschriebenen Art zu schaffen, bei dem die Druckbegrenzung nicht über eine Wegbegrenzung, sondern über ein Kräftegleichgewicht erreicht wird.

Erfindungsgemäß wird dies dadurch erreicht, daß der Einlaßsitz an einem gegenüber der Vorratsdruckluft entlastet ausgebildeten weiteren Wiegekolben vorgesehen ist, der auf der dem ausgesteuerten Druck abgekehrten Seite eine vom Atmosphärendruck beaufschlagte Wirkfläche aufweist, auf die zusätzlich eine zweite Wiegefeder einwirkt, und daß die beiden Wiegekolben mit ihren Federn gegenläufig im Gehäuse des Bremsventiles geführt und in der gemeinsamen Bremskammer vom begrenzten ausgesteuerten Druck beaufschlagt sind. Die Erfindung kehrt sich damit zunächst einmal völlig ab von dem bisherigen Verlauf der Realisierung des Standes der Technik, gemäß welchem eine Druckbegrenzung an Bremsventilen ausschließlich über eine Wegbegrenzung realisiert worden ist. Bei diesen bekannten Bremsventilen ist der Stufungsbereich der Wiegefeder größer als der Betätigungsweg bis zum Erreichen des mechanischen Anschlages am Gehäuse, d. h., der mechanische Anschlag ist der einzige Anschlag, der die gesamte Funktion des Bremsventiles begrenzt. Auch ein Überhub ist damit ausgeschlossen. Das erfindungsgemäße Bremsventil hingegen mit der kraftabhängigen Druckbegrenzung gestattet es, die Druckbegrenzung unabhängig von der Charakteristik des Steuerteils des Bremsventils festzulegen. Auch wird der jeweils eingestellte Begrenzungsdruck unabhängig von den kraft- und wegabhängigen Toleranzen des Steuerteils des Bremsventils eingehalten.

Weiterhin gestattet es die Druckbegrenzung unter Ausnutzung eines Kräftegleichgewichts, den Federteller der Stufungsfeder im Steuerteil zur Erzeugung einer progressiven Druck-Weg-Charakteristik am Wiegekolben anschlagen zu lassen. Dieser Anschlag kann unabhängig vom eingestellten Begrenzungsdruck gewählt werden. Die kraftmäßige Druckbegrenzung ist der Wegbegrenzung auch deshalb nicht äquivalent, weil nach Erreichen des Begrenzungsdruckes noch Weg zurückgelegt werden kann und damit die Möglichkeit der Realisierung eines Überhubes offensteht. Durch die Ausnutzung eines Kräftegleichgewichts entsteht darüber hinaus der besondere Vorteil, daß der mechanische Betätigungsteil des Bremsventiles vergleichsweise leichter und einfacher konstruiert werden kann als bei der wegbegrenzten Druckbegrenzung. Die wegbegrenzte Druckbegrenzung setzt systembedingt die Aufnahme der vollen und unter Umständen stark übersetzten Betätigungskraft im mechanischen Betätigungsteil voraus, während bei der Druckbegrenzung infolge eines Kräftegleichgewichtes der allgemeine übliche Anschlag an der Trittplatte des Bremsventiles beibehalten bleiben kann.

Die Übertragung der konstruktiven Ausbildung der Druckbegrenzung von einem Anhängersteuerventil einerseits auf das gattungsgemäße Bremsventil liegt insofern nicht nahe, als hier Ventile sehr verschiedener Gattung vorliegen und zum weiteren das Anhängersteuerventil eine erste Wiegefeder nicht besitzt.

Der Hub des zweiten Wiegekolbens ist größer als der Hub des ersten Wiegekolbens ausgebildet, damit unabhängig vom Betätigungsweg des Bremsventiles jeweils Abschlußstellungen erreichbar sind. Werden Abschlußstellungen bei großem Betätigungsweg durch die Anordnung eines Anschlages verhindert, dann kann auch dies die erwünschte Folge haben, beim Erreichen dieses Überhubes die Druckbegrenzung aufzuheben und den unbegrenzten, d. h. vollen Vorratsdruck, beispielsweise zum Zwecke der Erzielung einer Notbremswirkung, auszusteuern.

Der weitere Wiegekolben weist zwei Dichtungen gleichen Durchmessers auf und ist zwischen den Dichtungen an die Vorratsdruckluft angeschlossen. Damit ist dieser zweite Wiegekolben gegenüber der Vorratsdruckluft druckentlastet und es entsteht die vom Atmosphärendruck beaufschlagte Wirkfläche. Die Wiegefeder dieses zweiten Wiegekolbens ist einstellbar aufgelagert, um zu einem Fertigungstoleranzen der Teile des Bremsventiles auszugleichen und zum anderen die Druckbegrenzung einstellbar zu machen.

Die Erfindung wird anhand eines bevorzugten Ausführungsbeispieles weiter beschrieben. Es zeigt

Fig. 1 einen Halbschnitt durch ein zweikreisig ausgebildetes Bremsventil mit Druckbegrenzung und

Fig. 2 ein Diagramm des über den Betätigungsweg ausgesteuerten Druckes.

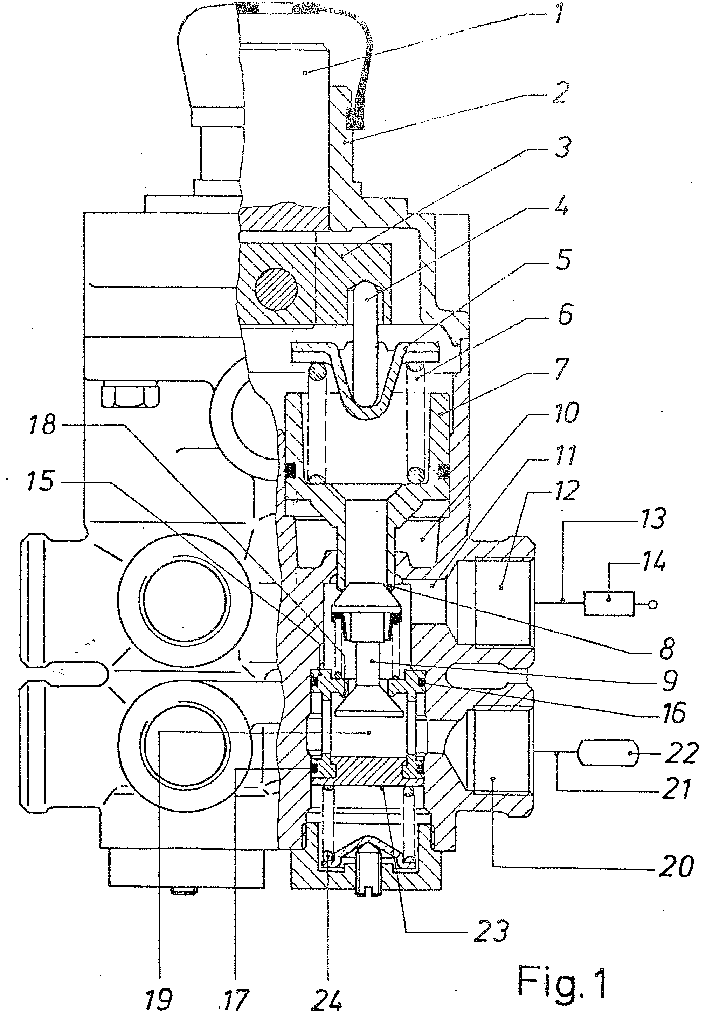

Das in Fig. 1 dargestellte zweikreisige Bremsventil ist nur hinsichtlich seines einen Kreises geschnitten dargestellt, wobei der Teil des Bremsventiles, der dem anderen Kreis zugeordnet ist, analog ausgebildet ist. Im folgenden wird nur der geschnittene Kreis beschrieben. Zum mechanischen Betätigungsteil gehört unter anderem neben einer nicht dargestellten Trittplatte ein Stößel 1, der im Gehäuse 2 gelagert ist und mit einem Wiegebalken 3 in Verbindung steht, mit dessen Hilfe in bekannter Weise die mechanische Betätigungskraft auf die beiden Kreise aufgeteilt wird. Dem Weg der Betätigungskraft folgend ist ein Stößel 4 vorgesehen, der über einen Federteller 5 auf eine Stufungsfeder 6 einwirkt, die dem ersten Wiegekolben 7 zugeordnet ist. Der erste Wiegekolben 7 ist zum Zwecke der Entlüftung hohl ausgebildet und trägt an seinem unteren Ende einen Rand 8, der mit dem Doppelventilkörper 9 das Auslaßventil 8, 9 bildet. Unterhalb des Wiegekolbens 7 ist die Wiegekammer 10 gebildet, die über die nicht abgedichtete Durchführung des Randes 8 des Wiegekolbens 7 am Gehäuse 2 mit der Bremskammer 11 in stetiger Verbindung steht. Vom Anschluß 12, der ebenfalls mit der Bremskammer 11 in Verbindung steht, führt die Leitung 13 zum Bremszylinder 14 oder einem Steuerventil.

Im unteren Teil, d. h. unterhalb der Bremskammer 11, ist im Gehäuse 2 ein weiterer Wiegekolben 15 verschiebbar gelagert, der die beiden Dichtungen 16 und 17 besitzt, die gleichen Durchmesser aufweisen. Der zweite Wiegekolben 15 ist in seinem Innern hohl ausgebildet, wobei er im Bereich der Dichtung 17 geschlossen ausgebildet ist, während im Bereich der Dichtung 16 einen eingezogenen Rand 18 aufweist, der mit dem Doppelventilkörper 9 das Einlaßventil 9, 18 bildet. Dieser Innenraum 19 des zweiten Wiegekolbens 15 ist über den Anschluß 20 und die Leitung 21 an Vorrats-Druckluft angeschlossen, die von einer nicht dargestellten Druckluftbeschaffungseinrichtung in den Vorratsbehälter 22 gefördert wird. Durch die geschlossene Ausbildung des Wiegekolbens 15 im Bereich der Dichtung 17 ist eine Wirkfläche 23 vorgesehen, die vom Atmosphärendruck beaufschlagt ist. Auf dieser Wirkfläche 23 stützt sich darüber hinaus die zweite Wiegefeder 24 ab. Die Kraft der Wiegefeder 24 ist einstellbar, und zwar zu Zwecken des Toleranzausgleiches der Einzelteile des Bremsventiles und zur Einstellung der Druckbegrenzung.

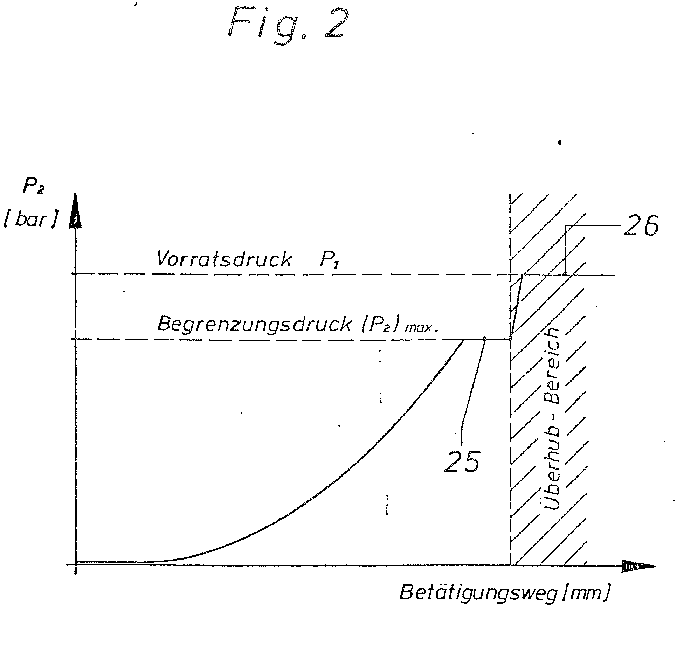

Die Wirkungsweise des Bremsventiles baut zunächst auf der bekannten Wirkungsweise von Bremsventilen mit dem Wiegekolben 7 und der Stufungsfeder 6 auf. Die Einzelteile des Bremsventils der Fig. 1 sind in einer mittleren Betätigungsstellung dargestellt, also in einer Abschlußstellung, bei der der Begrenzungsdruck noch nicht erreicht ist. Beim Niederdrücken des Stößels 1 hat sich zunächst der Rand 8 auf den Doppelventilkörper 9 aufgesetzt, so daß das Auslaßventil 8, 9 geschlossen worden ist. Anschließend wurde das Einlaßventil 9, 18 geöffnet, so daß ein entsprechend der Betätigung ausgesteuerter Druck in der Bremskammer 11 entstand und zu dem Bremszylinder 14 weitergeleitet worden ist. Mit Hilfe der Stufungsfeder 6 hat sich somit die Stellung gemäß Fig. 1 ergeben. Dies ist eine Abschlußstellung, in der sowohl das Einlaßventil 9, 18, wie auch das Auslaßventil 8, 9 geschlossen sind. Bei weiterer Betätigung des Stößels 1 durch Niedertreten der Trittplatte werden jeweils neue Abschlußstellungen erreicht, die mit Hilfe der Stufungsfeder 6 ohne weiteres möglich sind. Während dieser Betätigungen hält die zweite Wiegefeder 24 den weiteren Wiegekolben 15 im Anschlag am Gehäuse 2, so daß der Rand 18 gleichsam ortsfest ist. Wird jedoch der an der zweiten Wiegefeder 24 eingestellte begrenzte Druck aussteuerseitig erreicht, dann kann das Einlaßventil 9, 18 nicht mehr geöffnet werden, da der Wiegekolben 15 gegen die Kraft der Wiegefeder 24 vom ausgesteuerten Druck im Gleichgewicht gehalten wird, so daß der begrenzte Druck aussteuerseitig auch bei weiterer Betätigung eingehalten wird. Es ist dann der begrenzte Druck gemäß dem horizontalen Kurvenast 25 gemäß Fig. 2 erreicht. Falls das Ventil gemäß Fig. 1 noch so abgeändert wird, daß ein weiterer Betätigungsweg zurückgelegt werden kann, also ein Überhub möglichst gemacht wird, so kann zur zusätzlichen Erhöhung des Bremsdruckes und zur Ausschaltung der Druckbegrenzung durch Anordnung eines entsprechenden Anschlages für den zweiten Wiegekolben 15 in diesem Überhubbereich der volle unbegrenzte Vorratsdruck ausgesteuert werden, der im horizontalen Kurvenstück 26 gemäß Fig. 2 entspricht. Im allgemeinen ist es jedoch nicht erforderlich, diesen Überhubbereich vorzusehen.

## Patentansprüche

1. Mit einer Druckbegrenzungseinrichtung versehenes Bremsventil für Druckluftbremsanlagen von Kraftfahrzeugen, mit einem vom ausgesteuerten Druck beaufschlagten Wiegekolben (7) und einer Stufungsfeder (6) im mechanischen Betätigungsteil sowie mit einem Einlaßsitz (18), an dem Vorrats-Druckluft ansteht, einem Auslaßsitz (8) zum Entlüften der Bremskammer (11) und einem dem Einlaßventil (9, 18) und dem Auslaßventil (8, 9) zugeordneten Doppelventilkörper (9), dadurch gekennzeichnet, daß der Einlaßsitz (18) an einem gegenüber der Vorratsdruckluft entlastet ausgebildeten weiteren Wiegekolben (15) vorgesehen ist, der auf der dem ausgesteuerten Druck abgekehrten Seite eine vom Atmosphärendruck beaufschlagte Wirkfläche (23) aufweist, auf die zusätzlich eine zweite Wiegefeder (24) einwirkt, und daß die beiden Wiegekolben (7, 15) mit ihren Federn (6, 24) gegenläufig im Gehäuse (2) des Bremsventiles geführt und in der gemeinsamen Bremskammer (11) vom begrenzten ausgesteuerten Druck beaufschlagt sind.

2. Bremsventil nach Anspruch 1, dadurch gekennzeichnet, daß der Hub des zweiten Wiegekolbens (15) größer als der Hub des ersten Wiegekolbens (7) ausgebildet ist.

3. Bremsventil nach Anspruch 1 und 2, dadurch gekennzeichnet, daß der weitere Wiegekolben (15) zwei Dichtungen (16, 17) gleichen Durchmessers aufweist und zwischen den Dichtungen an die Vorratsdruckluft angeschlossen ist.

4. Bremsventil nach Anspruch 1, dadurch gekennzeichnet, daß die zweite Wiegefeder (24) einstellbar aufgelagert ist.

## Claims

1. Brake valve for compressed air braking systems of motor vehicles, this brake valve being provided with a pressure-limiting device, a balancing piston (7), to which the pressure deployed is applied, and with a grading spring (6) in the mechanical actuating part, and with an inlet-seat (18), at which compressed air from the reservoir is present, and outlet-seat (8) for venting the brake chamber (11), and a duplex valve body (9), which is assigned to the inlet valve (9, 18) and to the outlet valve (8, 9), characterised in that the inlet-seat (18) is provided on an additional balancing piston (15), which is designed to be unloaded with respect to the compressed air from the reservoir, and which possesses an effective surface (23) on the side facing away from the pressure deployed, the atmospheric pressure being applied to this surface, on which a second balancing spring (24) additionally acts, and in that the two balancing pistons (7, 15), with their springs (6, 24), are guided to move in opposite directions within the housing (2) of the brake valve, and the pressure deployed, which is limited, is applied to the two balancing pistons, in the common brake chamber (11).

2. Brake valve according to Claim 1, characterised in that the stroke of the second balancing piston (15) is designed to be larger than the stroke of the first balancing piston (7).

3. Brake valve according to Claims 1 and 2, characterised in that the additional balancing piston (15) possesses two seals (16, 17), of identical diameter, a connection to the compressed air from the reservoir being made between these seals.

4. Brake valve according to Claim 1, characterised in that the second balancing spring (24) is mounted in a manner permitting adjustment.

**Revendications**

1. Valve de frein pourvue d'un limiteur de pression pour les dispositifs de freinage pneumatiques des véhicules automobiles, comportant un piston de pesée (7) auquel est admise la pression de sortie et un ressort de modulation (6) dans la partie d'actionnement mécanique, ainsi qu'un siège de soupape d'admission (18) exposé à l'air comprimé de réserve, un siège de soupape d'échappement (8) pour désaérer la chambre de freinage (11) et un double corps de soupage (9) associé à la soupape d'admission (9, 18) et à la soupape d'échappement (8, 9), caractérisée en ce que le siège d'admission (18) est prévu sur un autre piston de pesée (15), détendu à l'égard de l'air comprimé de réserve, qui présente du côté opposé à la pression réglée de sortie une surface de transmission (23) exposée à la pression atmosphérique et sur laquelle agit, en outre, un second ressort de pesée (24), et les deux pistons de pesée (7, 15) avec leurs ressorts (6, 24) sont guidés à contresens dans le carter (2) de la valve et, ces pistons sont sollicités dans la chambre de freinage commune (11) par la pression limitée et réglée de sortie.

2. Valve de frein selon la revendicaton 1, caractérisée en ce que la course du second piston de pesée (15) est plus grande que la course du premier piston de pesée (7).

3. Valve de frein selon la revendication 1 ou 2, caractérisée en ce que le second piston de pesée (15) présente deux garnitures d'étanchéité (16, 17) de même diamètre, et est relié à l'air comprimé de réserve entre les garnitures.

4. Valve de frein selon la revendication 1, caractérisée en ce que le second ressort de pesée (24) est monté de manière réglable.

0 014 468

Fig.1

7

# Fig. 2

$P_2$ [bar]

Vorratsdruck $P_1$

Begrenzungsdruck $(P_2)_{max.}$

Überhub - Bereich

26

25

Betätigungsweg [mm]